# EUROPEAN PATENT SPECIFICATION

(11) **EP 1 459 970 B1**
(45) Date of publication and mention of the grant of the patent: **23.11.2005**
(21) Application number: 03251801.1
(22) Date of filing: 21.03.2003
(51) Int. Cl.: B62K 19/46, B62J 1/00

(54) **Waterproof compartment structure for a motorbike**
Wasserdichter Raumdeckel für ein Motorrad
Couvercle de logement étanche pour motocyclette

(43) Date of publication of application: 22.09.2004
(73) Proprietor: Kwang Yang Motor Co., Ltd., Kaohsiung City (TW)
(72) Inventor: Hsieh, Chun-Hung, Ta-liao Hsiang, Kaohsiung Hsien (TW)
(74) Representative: Moir, Michael Christopher

(56) References cited:
- EP-A- 0 751 063

## Description

The invention relates to a waterproof compartment structure for a motorbike, as disclosed in EPA751063.

Referring to Figures 1 to 3, a conventional compartment structure for a motorbike 1 has a compartment 10 with an abutment surface 11, a seat cushion 20 pivotally mounted on the compartment 10, and a flexible waterproof strip 30 (see Figures 2 and 3) disposed fixedly on a bottom periphery of the seat cushion 20. When the seat cushion 20 is closed on the compartment 10, the waterproof strip 30 abuts sealingly against the abutment surface 11 of the compartment 10 so as to block water from entering the compartment 10, thereby achieving its waterproof purpose.

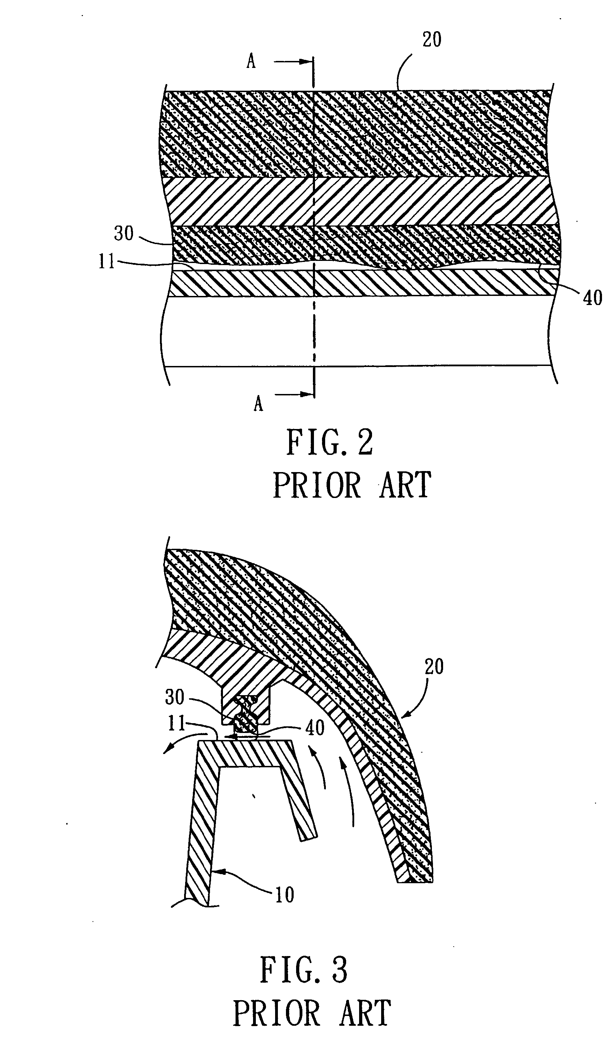

However, due to frequent opening and closing of the seat cushion 20 relative to the compartment 10, a pivot interconnecting the seat cushion 20 and the compartment 10 easily loosens so that a gap 40 is produced between the seat cushion 20 and the compartment 10. If it rains, rainwater can enter the compartment 10 through the gap 40, as shown by the arrows in Figure 3. Furthermore, due to the effects of ambient temperature and long-term use, elasticity of the waterproof strip 30 is reduced so that the waterproof strip 30 is susceptible to deformation, thereby enlarging the gap 40.

Therefore, the object of the present invention is to provide a waterproof compartment structure for a motorbike that is designed to block and guide water flow so as to achieve good waterproof effect.

According to this invention, a waterproof compartment structure for a motorbike includes a compartment, a seat cushion, and an annular flexible waterproof strip. The compartment includes a seat-connecting portion. The seat-connecting portion has a top surface formed with a groove, and at least one water guiding hole that extends through the seat-connecting portion, that is located under the groove, and that has a top end which is in fluid communication with a bottom end of the groove. The seat cushion is pivotally mounted on the compartment. The annular flexible waterproof strip is disposed fixedly on a bottom periphery of the seat cushion, and extends into and engages the groove in the seat-connecting portion so that the seat cushion and the compartment can be disposed in a liquid-tight seal state to achieve a waterproof effect.

Other features and advantages of the present invention will become apparent in the following detailed description of the preferred embodiments with reference to the accompanying drawings, of which:

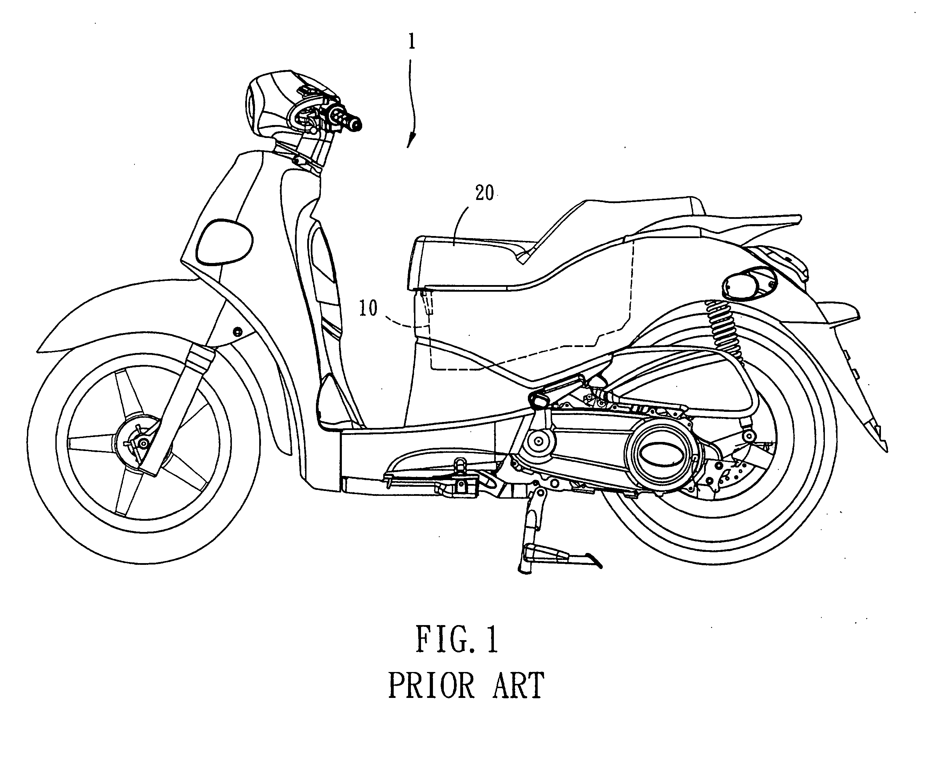

Figure 1 is a schematic view of a motorbike incorporating a conventional compartment structure, which includes a compartment and a seat cushion;
Figure 2 is a fragmentary enlarged sectional view of the conventional compartment structure, illustrating a gap between an abutment surface of the compartment and a waterproof strip on the seat cushion;
Figure 3 is a fragmentary sectional view of the conventional compartment structure taken along line A-A of Figure 2, illustrating how rainwater can enter the compartment through the gap;

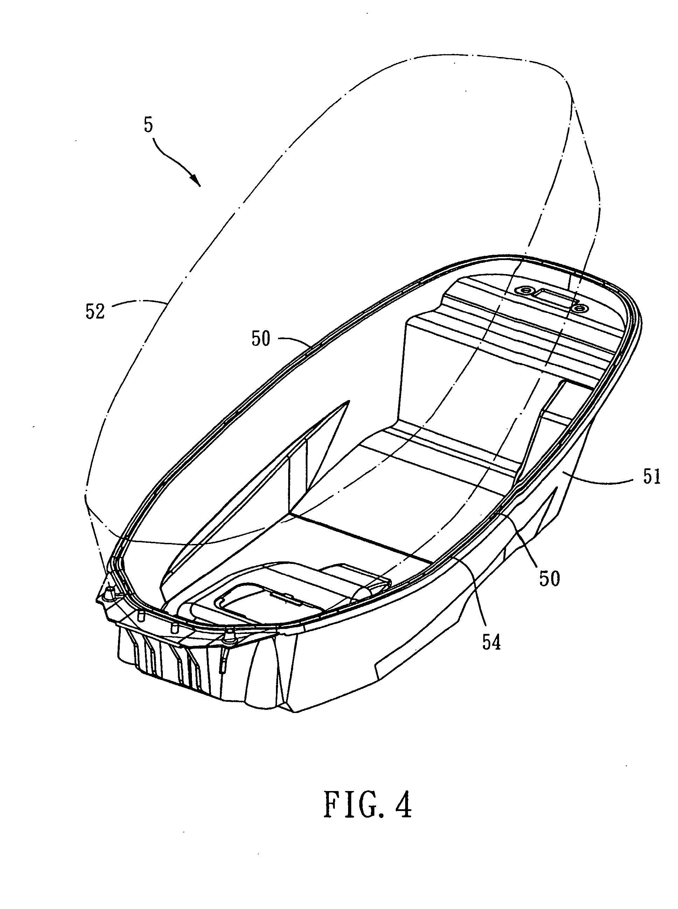

Figure 4 is a perspective view of the first preferred embodiment of a waterproof compartment structure for a motorbike according to the present invention;

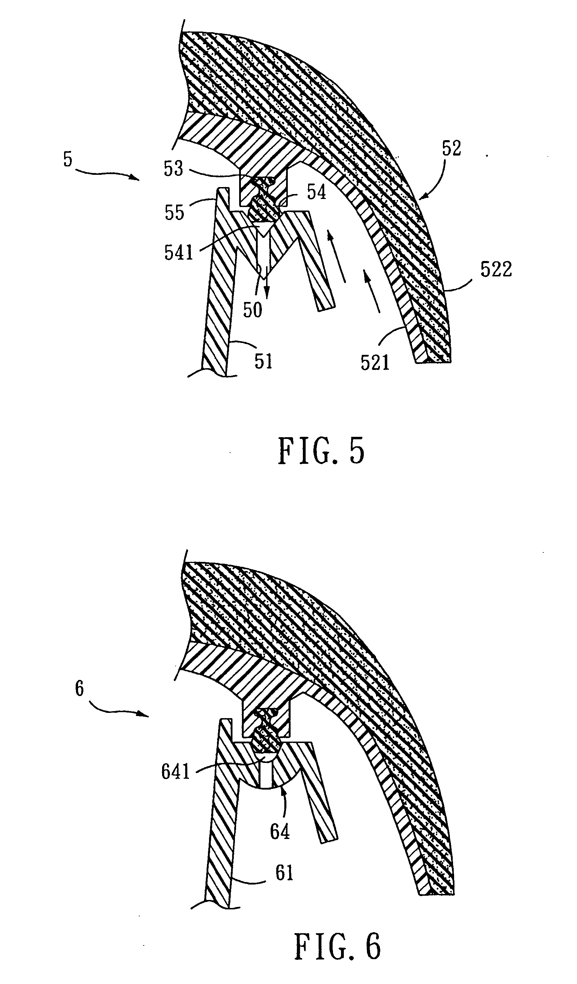

Figure 5 is a fragmentary sectional view of the first preferred embodiment, illustrating how a waterproof strip extends into a groove in a seat-connecting portion of a compartment of the first preferred embodiment; and
Figure 6 is a fragmentary sectional view of the second preferred embodiment of a waterproof compartment structure for a motorbike according to the present invention.

Referring to Figures 4 and 5, the first preferred embodiment of a waterproof compartment structure 5 for a motorbike (not shown) according to the present invention is shown to include a compartment 51, a seat cushion 52, and an annular flexible waterproof strip 53 (see Figure 5).

The compartment 51 includes a seat-connecting portion 54. The seat-connecting portion 54 has a top surface formed with a groove 541, and a plurality of water guiding holes 50, each of which extends through the seat-connecting portion 54, is located under the groove 541, and has a top end which is in fluid communication with a bottom end of the groove 541. In this embodiment, the groove 541 is V-shaped. The seat-connecting portion 54 further has an inner lateral periphery provided with a water-blocking protrusion 55 that extends upwardly from the top surface of the seat-connecting portion 54 and that is disposed adj acent to the groove 541.

The seat cushion 52 is pivotally mounted on the compartment 51, and is in the form of a bottom plate 521 and a cushion body 522 mounted on the bottom plate 521.

The annular flexible waterproof strip 53 is disposed fixedly on a bottom periphery of the bottom plate 521 of the seat cushion 52, and extends into and engages the groove 541 in the seat-connecting portion 54 so that the seat cushion 52 and the compartment 51 can be disposed in a liquid-tight sealing state to achieve a waterproof effect.

After the seat cushion 52 is closed on the compartment 51, the waterproof strip 53 extends into and engages the groove 541 in the seat-connecting portion 54 of the compartment 51, and seals the water guiding holes 50 at the same time. Thus, in actual use, the waterproof strip 53 is guided by the V-shaped configuration of the groove 541. As such, the seat cushion 52 and the compartment 51 can be maintained in a liquid-tight sealing state, thereby blocking entry of water into the compartment 51.

If heavy or long downpour of rain occurs, although rainwater, as shown by upward arrows in Figure 5, can reach the groove 541 through a gap between the waterproof strip 53 and the seat-connecting portion 54, due to the presence of the water guiding holes 50 in the seat-connecting portion 54 of the compartment 51, rainwater will be guided by the water guiding holes 50 to flow downwardly and outwardly, as shown by a downward arrow in Figure 5, so that rainwater cannot enter the compartment 51.

During washing of the motorbike, water can enter into the water guiding holes 50. However, water is blocked by the waterproof strip 53 so that it cannot enter the compartment 51. If washing time is too long, although water may flow through a gap between the waterproof strip 53 and the seat-connecting portion 54, it will still be discharged through the water guiding holes 50 due to the presence of the water-blocking protrusion 55 on the seat-connecting portion 54 of the compartment 51. As such, water is still prevented from flowing into the compartment 51.

Referring to Figure 6, the second preferred embodiment of a waterproof compartment structure 6 according to the present invention is shown to be substantially similar to the first preferred embodiment. However, in this embodiment, the groove 641 in the seat-connecting portion 64 of the compartment 61 is U-shaped. The advantages of the first preferred embodiment can be similarly attained using the second preferred embodiment.

From the above description of the preferred embodiments, it is apparent that due to the configuration of the seat-connecting portion 54, 64 of the compartment 51, 61, the waterproof strip 53 of the seat cushion 52 can be guided into and confined in the groove 541, 641 in the seat-connecting portion 54, 64 so that the seat cushion 52 and the compartment 51, 61 can be disposed in a liquid-tight sealing condition, thereby blocking water from entering the compartment 51, 61. Furthermore, when water flows through the gap between the waterproof strip 53 and the seat-connecting portion 54, 64, due to the presence of the water guiding holes 50 and the water-blocking protrusion 55 in the seat-connecting portion 54, 64 of the compartment 51, 61, water is prevented from flowing into the compartment 51, 61, thereby achieving good waterproof effect.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims. Reference numerals appearing in the claims are illustrative only and the claims shall be interpreted as if they are not present.

The description of the invention with reference to the drawings is by way of example only.

## Claims

1. A waterproof compartment structure (5) for a motorbike, **characterized by**:
a compartment (51) including a seat-connecting portion (54), the seat-connecting portion (54) having a top surface formed with a groove (541), and at least one drain aperture (50) in fluid communication with the groove (541);
a seat (52) moveably mounted on the compartment (51); and
a flexible waterproof strip (53) disposed on a bottom periphery of the seat (52), the waterproof strip (53) extending into and engaging the groove (541) in the seat-connecting portion (54) so as to form a liquid-tight seal between the seat (52) and the compartment (51).

2. The waterproof compartment structure (5) as claimed in claim 1, **characterized in that** the groove (541) is V-shaped.

3. The waterproof compartment structure (6) as claimed in claim 1, **characterized in that** the groove (641) is U-shaped.

4. The waterproof compartment structure (5) as claimed in claim 1, **characterized in that** the seat-connecting portion (54) has an inner lateral periphery formed with a water-blocking protrusion (55) extending upwardly from the top surface of the seat-connecting portion (54) and disposed adjacent to the groove (541).

## Patentansprüche

1. Wasserdichte Fachstruktur bzw. wasserdichter Raumdeckel (5) für ein Motorrad, **gekennzeichnet durch**:
ein Fach (51), das einen Sitzverbindungsabschnitt (54) umfasst, wobei der Sitzverbindungsabschnitt (54) eine obere Oberfläche hat, die mit einer Nut (541) ausgebildet ist, und mindestens eine Ablauföffnung (50) in Fluidverbindung mit der Nut (541);
einen Sitz (52), der beweglich auf dem Fach (51) befestigt ist; und
einen flexiblen, wasserdichten Streifen (53), der an einem Bodenumfang des Sitzes (52) angeordnet ist, wobei der wasserdichte Streifen (53) sich in die Nut (541) im Sitzverbindungsabschnitt (54) hinein erstreckt und damit in Eingriff kommt, um so eine flüssigkeitsdichte Abdichtung zwischen dem Sitz (52) und dem Fach (51) auszubilden.

2. Wasserdichte Fachstruktur bzw. wasserdichter Raumdeckel (5) nach Anspruch 1, **dadurch gekennzeichnet, dass** die Nut (541) V-förmig ist.

3. Wasserdichte Fachstruktur bzw. wasserdichter Raumdeckel (6) nach Anspruch 1, **dadurch gekennzeichnet, dass** die Nut (641) U-förmig ist.

4. Wasserdichte Fachstruktur bzw. wasserdichter Raumdeckel (5) nach Anspruch 1, **dadurch gekennzeichnet, dass** der Sitzverbindungsabschnitt (54) einen inneren, seitlichen Umfang hat, der mit einem Wasser abblockenden Vorsprung (55) ausgebildet ist, welcher sich nach oben von der oberen Oberfläche des Sitzverbindungsabschnittes erstreckt und benachbart zur Nut (541) angeordnet ist.

## Revendications

1. Structure de compartiment étanche (5) pour motocyclette, **caractérisée par**
un compartiment (51) comportant une partie de raccordement au siège (54), la partie de raccordement au siège (54) ayant une surface de dessus formée avec une rainure (541), et au moins une ouverture de vidange (50) en communication fluide avec la rainure (541) ;
un siège (52) monté mobile sur le compartiment (51) ; et
une bande étanche flexible (53) disposée sur la périphérie du fond du siège (52), la bande étanche (53) s'étendant dans, et engageant la rainure (541) dans la partie de raccordement au siège (54) de façon à former un joint étanche aux liquides entre le siège (52) et le compartiment (51).

2. Structure de compartiment étanche (5) selon la revendication 1, **caractérisé en ce que** la rainure (541) est en forme de V.

3. Structure de compartiment étanche (6) selon la revendication 1, **caractérisé en ce que** la rainure (641) est en forme de U.

4. Structure de compartiment étanche (5) selon la revendication 1, **caractérisé en ce que** la partie de raccordement au siège (54) présente une périphérie latérale intérieure formée avec une saillie de blocage d'eau (55) s'étendant vers le haut depuis la surface de dessus de la partie de raccordement au siège (54) et disposée adjacente à la rainure (541).
